Europäisches Patentamt

(19) European Patent Office

Office européen des brevets

(11) Publication number: 0 441 568 A2

(12) # EUROPEAN PATENT APPLICATION

(21) Application number: 91300878.5

(51) Int. Cl.⁵: C11D 17/00

(22) Date of filing: 04.02.91

(30) Priority: 05.02.90 GB 9002514

(43) Date of publication of application:
14.08.91 Bulletin 91/33

(84) Designated Contracting States:
AT BE CH DE DK ES FR GB GR IT LI LU NL SE

(71) Applicant: Albright & Wilson Limited
210-222 Hagley Road West
Oldbury Warley West Midlands B68 0NN (GB)

(72) Inventor: Blezard, Michael
29 Headlands Drive
Whitehaven, Cumbria (GB)
Inventor: Jenkinson, Janine Teresa
Low Park
Loweswater, Cockermouth (GB)

(74) Representative: Savidge, Roger Gordon
Madgwick et al
c/o Albright & Wilson Limited, P.O. Box 2098,7
Stars Road
Oldbury, Warley, West Midlands B69 4PR (GB)

(54) Surfactant mixtures.

(57) A concentrated surfactant mixture suitable for oil slick dispersal comprises at least one anionic sulphated or sulphonated surfactant, an at least sparingly water-soluble aliphatic alcohol or alcohol ether which is liquid at room temperature, but which is not fully miscible with water in all proportions, and water, the composition being at least predominantly in the $L_2$ phase.

EP 0 441 568 A2

# SURFACTANT MIXTURES

The present invention relates to surfactant mixtures for use in oil slick dispersion or oil recovery.

There is demand for surfactant mixtures comprising anionic sulphate and/or sulphonate surfactants and sparingly water soluble alcohols, for use in oil slick dispersion or oil recovery.

A problem with such mixtures is that they are required to be readily mobile, but should also be supplied in as concentrated a form as possible, since a major area of use is on offshore installations which entail severe constraints on the handling of unnecessarily bulky supplies. For the same reasons the surfactant should be readily soluble in sea-water.

Surfactants are normally supplied as aqueous micellar solutions, known as $L_1$ - phases, which are optically isotropic liquids. The are inconveniently dilute for supply to offshore oil installations. If the concentration of an $L_1$ solution is increased to about 30 to 40%, depending on the surfactant the viscosity rises sharply and in many instances an immobile gel, the M - phase is formed. The M - phase cannot be conveniently handled using normal oilfield equipment.

It is known that anionic surfactant mixtures often form G - phases, which are optically anisotropic, thixotropic, liquid crystal phases having a lamellar structure.

Such compositions have been described in GB-2021141. They occur at higher concentrations than the $L_1$ or M - phases, and have been used as a means of supplying surfactants in a pumpable state at concentrations higher than the $L_1$ - phase.

The G - phase has, however, certain limitations. It is only formed over a relatively narrow range of concentrations, this varies considerably for different surfactants, but in a typical example is between 50 and 60% surfactant.

At the upper limit a phase transition to the immobile hydrated solid is normally observed and at the lower limit the almost equally immobile M - phase is formed. Some surfactants do not form G - phase at normal temperatures, but only on heating. Others form G -phases over such narrow ranges of concentration that they cannot be prepared industrially due to the difficulty of avoiding local variations in concentration causing gellation or solidification of the surfactant mass rendering further mixing impossible.

Even where G - phases can be readily obtained they are thixotropic, and are usually less mobile and easily handled than the $L_1$ phase. Care must be taken when diluting G - phases to their working concentration to avoid gellation, which usually happens when water is added to the G - phase. G - phases are not normally capable of being readily diluted with brine.

We have found that in the case of mixtures of anionic surfactants with sparingly soluble aliphatic alcohol cosurfactants it is possible to obtain G - phases at about 40% by weight total surfactant, which is a substantial improvement compared with the concentration of 25 to 30% at which they are conventionally supplied, but that due to their thixotropic character the mobility of such phases is less than is desired for oil field use. We have now discovered that when such mixtures are prepared at concentrations higher than those corresponding to the G - phase, instead of forming a solid, a cloudy non-thixotropic liquid phase is formed which we believe may be a suspension of G - phase in a liquid, non - thixotropic phase known as $L_2$ - phase which resembles an inverted $L_1$, i.e. with a continuous organic phase and dispersed water. We discovered in particular that addition of electrolyte provides clear, mobile, optically isotropic, non-thixotropic liquids which we believe to be $L_2$ phases.

We have found that the $L_2$ phases are substantially more mobile than G - phases and yet can be obtained at higher concentrations. They can usually be diluted with water, on vigorous stirring, without problems of gellation.

References herein to an $L_2$ phase are to be construed as references to an optically isotropic phase containing water and a surfactant at a concentration above 40% by weight, based on the total weight of the composition, which is readily soluble in water-immiscible organic solvents such as iso-octanol or hexane, without the formation of intermediate birefringent phases, and is less readily soluble in water.

Our invention provides a pourable surfactant concentrate comprising at least one sulphated or sulphonated anionic surfactant, an at least sparingly water miscible aliphatic alcohol or ether alcohol, which is liquid at room temperature, but which is not miscible with water in all proportions, and water, the concentration of surfactant being above the minimum concentration at which the composition exists, at least predominantly, in the $L_2$ phase at room temperature.

According to a preferred embodiment our composition contains sufficient electrolyte to form an optically clear $L_2$ phase.

Alternatively the composition may contain a minor proportion of G - phase or M - phase dispersed in the $L_2$ phase.

The surfactant according to our invention preferably comprises $C_{10-20}$ alkyl aryl sulphonate e.g. $C_{10-14}$ alkyl benzene sulphonate preferably in admixture with other anionic surfactants such as alkyl ether sulphates, alkyl sulphates, alkyl ether sulphonates, paraffin sulphonates and/or olefin sulphonates. The alkyl benzene sulphonate typically constitutes from 40 to 90% of the total weight of surfactant e.g. 50 to 80%.

Preferably mixtures of sodium alkyl benzene sulphonate with sodium alkyl polyoxyethylene sulphonate and/or sulphate e.g. comprising $C_{10-18}$ alkyl groups and an average of from 2 to 10 ethyleneoxy groups per molecule are used. Particularly preferred are mixtures which additionally contain sodium α olefin sulphonate.

The alcohol is preferably a $C_{4-10}$ alkanol especially a $C_{4-8}$ alkanol for instance it may be n - butanol, iso-amyl alcohol, n -hexanol, or iso-octanol. The proportion of alcohol by weight of the total surfactant is preferably at least 10% more preferably at least 20% e.g. at least 25% and preferably less than 60% more preferably less than 50% e.g. less than 40%. The alcohol ether may be a hydroxy ether such as propylene glycol monomethyl ether or a fatty alcohol mono or di ethoxylate, e.g. stearol diethoxylate.

The electrolyte may be any water soluble non surface active salt which tends to salt surfactants out of solution. For instance sodium chloride is preferred. Sodium sulphate may be used but is not preferred due to its low solubility, especially at low temperatures. Sodium, potassium or lithium salts such as bromides, nitrates, phosphates, acetates, formates, citrates, oxalates, succinates, lactates, carbonates, bicarbonates, sulphites, nitrates and/or borates may also be used.

Preferably the electrolyte may be present in concentrations up to about 15% by weight based on the anionic surfactant e.g 2 to 10% especially 3 to 8%.

The total concentration of anionic surfactant is sufficient to form an $L_2$ phase, e.g. usually greater than 40% typically 43 to 60% by weight of the composition. The total surfactant concentration is typically greater than 50%, e.g. 45 to 80% by weight.

The composition may be used for the dispersal of oil slicks. In use it is normally diluted with brine to a total active concentration of from 0.1 to 10% by weight.

Compositions according to our invention may also find use as liquid detergents.

The invention is illustrated by the following examples :

| **(In parts by weight of active) component** | **A** | **B** | **C** |
|---|---|---|---|
| (1) Sodium alkyl ($c_{10-18}$) Ethoxy (3EO) sulphonate | - | - | 1.0 |
| (2) Sodium alkyl ($c_{10-18}$) Ethoxy (3EO) Sulphate | 1.0 | - | - |
| (3) Sodium alkyl (approx $c_{13}$) Benzene sulphonate | 2.0 | 3.0 | 3.0 |
| (4) Sodium alpha olefin ($c_{14-16}$) sulphonate | 1.0 | 1.0 | - |
| (5) Isoamyl alcohol | 2.0 | 2.0 | 2.0 |
| Anionic active (on total composition) | 45% | 45% | 45% |
| Sodium Chloride (on anionic surfactant) | 6% | 7% | 6% |

The balance of each composition included water, adventitious sodium sulphate and unsulph(on)ated matter.

Compositions A, B, and C were clear, flowable liquids at RT and 5°C droplets added to cold tap water remained as droplets suggesting that the compositions are $L_2$ phase.

Compositions A, B, and C at 45% am without added salt are cloudy but still favourable at RT the preferred compositions are clear.

EP 0 441 568 A2

| Component | D | E |
|---|---|---|
| (2) Active | 1.0 | 1.0 |
| (3) Active | 2.0 | 2.0 |
| (4) Active | 1.0 | 1.0 |
| IMS | 2.0 | - |
| n - Propanol | - | 2.0 |
| n - Butanol | - | - |
| Anionic active | 45% | 45% |
| Sodium Chloride (on anionic active) | 6% | 6% |

formulations D and F were clear at RT at 45% active. Without the salt the compositions were cloudy.

## Claims

1. A pourable surfactant concentrate comprising at least one sulphated or sulphonated anionic surfactant, an at least sparingly water soluble aliphatic alcohol or ether alcohol which is liquid at room temperature, but which is not fully miscible with water, the concentration of surfactant being above the minimum concentration at which the composition exists, at least predominantly, in the $L_2$ phase at room temperature.

2. A composition according to claim 1 containing sufficient dissolved electrolyte to form an optically clear, $L_2$ - phase composition.

3. A composition according to claim 1 containing a minor proportion of G - phase or M - phase dispersed in an $L_2$ phase.

4. A composition according to any foregoing claim containing a $C_{4-10}$ alkanol and/or alkenol.

5. A composition according to any foregoing claim containing from 10 to 60% of said alkanol or alkenol, based on the total weight of surfactant.

6. A composition according to claim 5 containing 20 to 50% by weight of said alkanol and/or alkenol based on the total weight of surfactant.

7. A composition according to any foregoing claim wherein said alcohol is n-butanol, iso amyl alcohol, n-hexanol iso-octanol, propylene glycol monomethyl ether, and/or a fatty alcohol mono or di ethoxylate.

5

8. A composition according to any foregoing claim wherein the total surfactant concentration is from 50 to 80% by weight of the composition.

9. A composition according to any foregoing claim containing from 43 to 60% by weight of anionic sulphonated and/or sulphated surfactant based on the total weight of the composition.

10. A composition according to any foregoing claim wherein said anionic surfactant comprises a $C_{10-20}$ alkyl benzene sulphonate and a $C_{10-20}$ alkyl sulphate, alkyl ether sulphate, alkyl ether sulphonate, paraffin sulphonate and/or olefin sulphonate.

11. A composition according to any foregoing claim comprising from 2 to 10% by weight of electrolyte, based on the weight of surfactant.

12. A composition according to claim 11 wherein said electrolyte is chloride.

13. A solution of a composition according to any foregoing claim in brine.

14. The use of a composition according to any foregoing claim as an oil slick dispersant.